# EUROPÄISCHE PATENTSCHRIFT

(11) **EP 2 430 504 B1**
(45) Veröffentlichungstag und Bekanntmachung des Hinweises auf die Patenterteilung: **20.07.2016**
(21) Anmeldenummer: 10765744.7
(22) Anmeldetag: 03.05.2010
(51) Int. Cl.: G05B 23/02

(54) **ALARMVERWALTUNGSSYSTEM**
ALARM MANAGEMENT SYSTEM
SYSTÈME DE GESTION D'ALARME

(30) Priorität: 13.05.2009 DE 102009021062
(43) Veröffentlichungstag der Anmeldung: 21.03.2012
(73) Patentinhaber: ABB Technology AG, 8050 Zürich (CH)
(72) Erfinder: HOLLENDER, Martin, 69221 Dossenheim (DE); SÖLLNER, Rene, 01591 Riesa (DE)
(74) Vertreter: Kock, Ina
(86) Internationale Anmeldenummer: PCT/EP2010/002680
(87) Internationale Veröffentlichungsnummer: WO 2010/130343

(56) Entgegenhaltungen:
- WO-A1-02/086750
- US-A- 5 581 242
- US-A1- 2006 190 584
- US-A1- 2007 239 291
- US-B1- 6 766 368
- BRAY M ET AL: "PRACTICAL ALARM FILTERING", INTECH, XX, XX, Bd. 41, Nr. 2, 1. Februar 1994 (1994-02-01), Seiten 34-36, XP009014395, ISSN: 0192-303X
- LARSON ET AL: "Alarm Reduction and Root Cause Analysis for Nuclear Power Plant Control Rooms", INTERNET CITATION, 2005, XP002413688, Gefunden im Internet: URL:http://www.goalart.com/en/newsandpubli cations/publications.asp [gefunden am 2005-01-01]

## Beschreibung

Die Erfindung bezieht sich auf Alarmverwaltungssystem und ein Verfahren zur Verwaltung von Alarmmeldungen aus Messwerten, Prozessgrößen und/oder Zustandsmeldungen einer technischen Anlage oder eines technischen Prozesses und ist insbesondere geeignet zur graphischen Darstellung von Prozessalarmen in Kraftwerken und anderen großtechnischen Anlagen.

Alarmsysteme sind wesentliche Einrichtungen von Überwachungssystemen oder Leitsystemen technischer Anlage, wie beispielsweise Kraftwerksanlagen oder Produktionsanlagen, und sie sind wichtiges Hilfsmittel für das Betriebspersonal, um Anlagen- oder Prozesszustände, die einen unmittelbaren Eingriff erfordern, zu erkennen. Die Arbeitsweise der Alarmsysteme zur Ermittlung und Anzeige von Anlagen- oder Prozesszuständen wird durch Alarmmeldungen bestimmt, also beispielsweise durch festgelegte Grenzwerte von Prozessvariablen. Diese Alarmmeldungen, werden den Bedienern der Anlagen in verschiedenster Weise zur Verfügung gestellt.

Mittels einer sogenannten Alarmtafel wird jeder Alarmmeldung ein definierter Bereich innerhalb einer grafischen Darstellung zugeordnet. Wird ein dieser Alarmmeldung zugeordneter Grenzwert über- bzw. unterschritten, verändert sich beispielsweise die Farbe des Bereiches oder der Bereich beginnt zu blinken.

Eine weitere aus dem Stand der Technik bekannte Darstellungsart ist die Verwendung einer Liste zur Auflistung der anstehenden Alarmmeldungen, wobei die jeweils neu hinzukommenden Alarme fortlaufend an den Anfang oder das Ende der Liste hinzugefügt werden. Dabei können diejenigen Alarme, welche der Bediener noch nicht quittiert hat, farbig markiert oder mittels eines Blinksignals signalisiert werden. Um Alarmmeldungen bezüglich ihrer Priorität zu kennzeichnen, werden unterschiedliche Schriftfarben für die jeweilige Priorität der Alarmmeldung verwendet bzw. bei Alarmmeldungen mit einer hohen Priorität werden akustische Signale eingesetzt, die jedoch auf Dauer einen nicht vernachlässigbaren Lärm erzeugen.

Auch eine Benachrichtigung der Bediener der Anlage über SMS-Dienste oder EMails sind aus dem Stand der Technik bekannt. Jedoch ist diese Benachrichtigungsform nur dann anwendbar, wenn die Alarmmeldungen eine gewisse Anzahl nicht übersteigen, was jedoch in großtechnischen Anlagen oft nicht gegeben ist.

Mit den vorab genannten Darstellungsmethoden zur Alarmdarstellung in großtechnischen Anlagen lassen sich zeitliche Zusammenhänge zwischen den anstehenden Alarmmeldungen nur schwer oder gar nicht erkennen. Bei einem hohen Alarmaufkommen werden die Anlagenbediener schnell überfordert und können nicht rechtzeitig mit den notwendigen Maßnahmen reagieren. Auch werden akustische Signale und Meldungen über SMS- bzw. E-mail- Benachrichtigungen vielfach abgeschaltet, da der jeweilige Dienst sonst von der Vielzahl der anstehenden Alarmmeldungen überfordert ist

Die WO 02/086750 A1 offenbart ein Verfahren zur Mitteilung von Alarmzuständen, bei dem die Alarmzustände bezüglich Alarmfilterkriterien analysiert werden und dementsprechend entschieden wird, ob der jeweilige Alarmzustand mitgeteilt wird oder nicht. Alarmfilterkriterien können beispielsweise sein der Schweregrad des Ereignisses, die relative Bedeutung des Gerätes, bei dem das Ereignis aufgetreten ist und die Dringlichkeit, den Alarm mitzuteilen.

Der Erfindung liegt die Aufgabe zugrunde, ein Alarmverwaltungssystem, und ein Verfahren zur Verwaltung von Alarmen aus Messwerten, Prozessgrößen und/oder Zustandsmeldungen einer technischen Anlage oder eines technischen Prozesses anzugeben, wodurch vorgenannte Nachteile des Standes der Technik überwunden werden und welches insbesondere zur übersichtlichen grafischen Darstellung von Prozessalarmen in Kraftwerken und anderen großtechnischen Anlagen geeignet ist.

Diese Aufgabe wird erfindungsgemäß durch ein Alarmverwaltungssystem mit den in Anspruch 1 angegebenen Merkmalen gelöst. Vorteilhafte Ausgestaltungen, Verbesserungen des erfindungsgemäßen Alarmverwaltungssystems und ein entsprechendes Verfahren zur grafischen Darstellung von Alarmmeldungen einer technischen Anlage oder eines technischen Prozesses sind in weiteren Ansprüchen und in der Beschreibung angegeben.

Das erfindungsgemäße Alarmverwaltungssystem zur Verwaltung von Alarmmeldungen aus Messwerten, Prozessgrößen und/oder Zustandsmeldungen einer technischen Anlage oder eines technischen Prozesses umfasst eine Datenverarbeitungseinrichtung, der die Alarmmeldungen zuführbar und mittels Anzeigemodulen darstellbar sind.

Die Datenverarbeitungseinrichtung weist ein Modul zum Anlegen von Alarmkanälen für verschiedene Darstellungsarten der jeweils anstehenden Alarmmeldungen auf, wobei der mit dem Modul angelegte Alarmkanal jeweils einem der Anzeigemodule zugeordnet ist. Die angelegten Alarmkanäle sind als Kommunikationskanäle ausgeführt, die eine Übertragung der Alarmmeldungen zu den Anzeigemodulen ausführen.

Die Darstellung der Alarme kann dabei beispielsweise als Liste und/oder in Verbindung mit akustischen Signalen ausgeführt sein. Auch können die Alarmkanäle mit einer elektronischen Nachrichtenübermittlung per E-Mail oder SMS verknüpft sein, wodurch es dem Bediener der technischen Anlage oder des technischen Prozesses in vorteilhafter Weise möglich ist, eine ihm zugeordnete Alarmmeldung auch außerhalb einer Leitanlage oder Leitwarte der Anlage zu empfangen und/oder auszuwerten.

Dem angelegten Kanal sind jeweils Randbedingungen bezüglich einer Zuordnung zum entsprechenden Anzeigemodul zugewiesen. Eine beispielhafte Randbedingung für den Kanal zur Darstellung der akustischen Signale ist beispielsweise die Lautstärke eines Signals im Kontrollraum der Anlage. Dem angelegten Kanal zur Darstellung der Alarmmeldungen in Form von Listen kann als Randbedingungen beispielsweise die maximal anzuzeigende Anzahl von Alarmmeldung innerhalb eines festgelegten Zeitraumes und/oder eine zuvor definierte Anzahl von Alarmmeldungen einer hohen Priorität zugeordnet werden. Auch kann als Randbedingung für den jeweiligen Kanal festgelegt sein, dass einem Anlagenbediener innerhalb eines Arbeitstages eine begrenzte Anzahl von SMS oder E-Mails bezüglich anstehender Alarmmeldungen übermittelt und angezeigt werden.

In einem erfindungsgemäßen Ausführungsbeispiel ist vorgesehen, dass für die von einer der Datenverarbeitungseinrichtung gebildete Leitwarte Kanäle angelegt sind, deren Randbedingungen festlegen, dass in der Leitwarte beispielsweise maximal zwei Alarmmeldungen einer niedrigen Priorität angezeigt und/oder akustisch gemeldet werden.

Erfindungsgemäß ist für jeden Kanal vorgesehen, einen mittels eines Vergleichsmoduls einen Vergleich der Alarmmeldungen mit den zugeordneten Randbedingungen bezüglich einer Übereinstimmung durchzuführen. Diejenigen Alarmmeldungen, die mit den vorgegebenen Randbedingungen des jeweiligen Kanals übereinstimmen, sind dem entsprechendem Anzeigemodul des jeweiligen Kanals zur Darstellung zuführbar. Diejenigen Alarmmeldungen, die mit den zugeordneten Randbedingungen bezüglich einer Zuordnung zum entsprechenden Anzeigemodul nicht übereinstimmen, sind einem Auswahlmodul zuführbar, auf Übereinstimmung mit zuvor festgelegten Ausweichregeln zur Zuordnung zu dem jeweiligen Anzeigemodul überprüfbar und entsprechend den jeweils in den Ausweichregeln festgelegten Bedingungen den entsprechenden Anzeigemodulen zur Darstellung übermittelbar.

Mit den Ausweichregeln wird festgelegt, unter welchen Bedingungen einem der zuvor angelegten Kanäle keine Alarmmeldungen mehr zuzuführen sind.

Beispielsweise kann eine regelbasierte Auswertung durch Ausweichregeln gemäß, der nachfolgenden Bedingungen ausgeführt werden:
- Nutze Kanal 1, welcher zur Darstellung der Alarmmeldung als SMS für Bediener 1 vorgesehen ist.
- Ist Kanal 1 nicht verfügbar oder durch die Anzeige zu vieler Alarmmeldungen überfordert, soll die Alarmmeldung zu Kanal 2, welcher zur Darstellung der Alarmmeldung als SMS für Bediener 2 vorgesehen ist, weitergeleitet werden.
- Ist auch Kanal 2 nicht verfügbar, soll die Alarmmeldung zur Leitwarte gemeldet und dort angezeigt werden.

Ein weiteres Beispiel für eine Ausweichregel bildet folgende Bedingung ab:
- Stehen mehr als zwei Alarme mit einer hohen Priorität am entsprechenden Kanal an, dann sind alle mit einer niedrigeren Priorität anstehenden Alarmmeldungen in einen Zwischenpuffer, beispielsweise zur Archivierung und/oder einer nachfolgenden Auswertung und Analyse zu übertragen.

Mit dem erfindungsgemäßen Alarmverwaltungssystem wird in vorteilhafter Weise erreicht, dass insbesondere auch bei einem hohen Aufkommen an anstehenden Alarmmeldungen die Betrachter des jeweils dem entsprechenden Kanal zugeordnetem Anzeigemodul nicht mehr überfordert werden, da sie nur noch die Alarmmeldungen auf ihren Anzeigemodul erhalten, welche sie auch in einer angemessenen Zeit verarbeiten und darauf mit den notwendigen Maßnahmen reagieren können.

Des Weiteren wird die gestellte Aufgabe auch durch ein Verfahren zur Verwaltung von Alarmmeldungen aus Messwerten, Prozessgrößen und/oder Zustandsmeldungen einer technischen Anlage oder eines technischen Prozessesgelöst, wobei die Alarmmeldungen mittels Anzeigemodulen dargestellt werden. Das erfindungsgemäße Verfahren wird unter Einsatz einer Datenverarbeitungseinrichtung ausgeführt, wobei die Datenverarbeitungseinrichtung Zugriff auf die Alarmmeldungen aus dem Prozess oder der Anlage hat.

Gemäß dem erfindungsgemäßen Verfahrens werden Alarmkanäle für verschiedene Darstellungsarten der jeweils anstehenden Alarmmeldungen angelegt, die der jeweils angelegte Alarmkanal wird für die verschiedenen Darstellungsarten jeweils einem der Anzeigemodule zugeordnet und von den Anzeigemodulen werden Darstellungsarten für die anstehende Alarmmeldungen als Listen, Alarmwolken, Darstellungen in Verbindung mit akustischen Signalen und/oder Alarmchroniken bereitgestellt.

Anhand der nachfolgend dargestellten Verfahrensschritte wird der Verfahrensablauf des erfindungsgemäßen Verfahrens erläutert.

In einem ersten Schritt werden Alarmkanäle für verschiedene Darstellungsarten der jeweils anstehenden Alarmmeldungen angelegt und die angelegten Alarmkanäle für die verschiedenen Darstellungsarten jeweils einem entsprechendem Anzeigemodul zugeordnet.

Für die angelegten Kanäle werden in einem zweiten Schritt jeweils Randbedingungen bezüglich einer Zuordnung zum entsprechenden Anzeigemodul festgelegt und in einem dritten Schritt wird für jeden Kanal ein Vergleich der anstehenden Alarmmeldungen mit den zugeordneten Randbedingungen bezüglich einer Übereinstimmung durchgeführt.

In einem vierten Verfahrensschritt werden diejenigen Alarmmeldungen, die mit den zugeordneten Randbedingungen des jeweiligen Kanals übereinstimmen dem entsprechendem Anzeigemodul des jeweiligen Kanals zur Anzeige zugeführt.

Diejenigen Alarmmeldungen, die mit den zugeordneten Randbedingungen bezüglich einer Zuordnung zum entsprechenden Anzeigemodul nicht übereinstimmen werden in einem weiteren Schritt einem Auswahlmodul zugeführt und auf Übereinstimmung mit zuvor festgelegten Ausweichregeln zur Zuordnung zu dem jeweiligen Anzeigemodul überprüft.

In einem letzten Schritt werden die im vorangegangenen Schritt mit den Ausweichregeln überprüften Alarmmeldungen entsprechend den jeweils in den Ausweichregeln festgelegten Bedingungen den entsprechenden Anzeigemodulen zur Darstellung übermittelt.

Die weitere Beschreibung der Erfindung und deren Vorteile sowie deren Ausgestaltungen erfolgt nachstehend anhand von Ausführungsbeispielen, die in Zeichnungsfiguren dargestellt sind.

Es zeigen:
- **Fig.** 1: ein beispielhaftes System zur Verwaltung von anstehenden Alarmmeldungen,

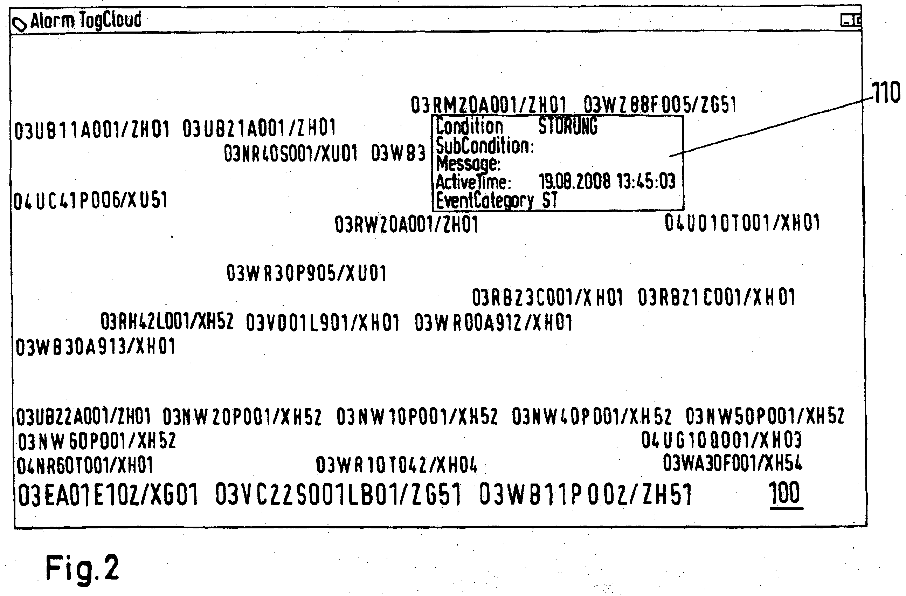

- **Fig.** 2: ein beispielhaftes Anzeigemodul zur Darstellung von Alarmmeldungen mittels einer Alarmwolke, und
- **Fig**. 3: ein weiteres Anzeigemodul zur Darstellung von anstehenden Alarmmeldungen mittels einer Alarmaufzeichnung, die einen zeitlichen Verlauf von anstehenden Alarmen zeigt.

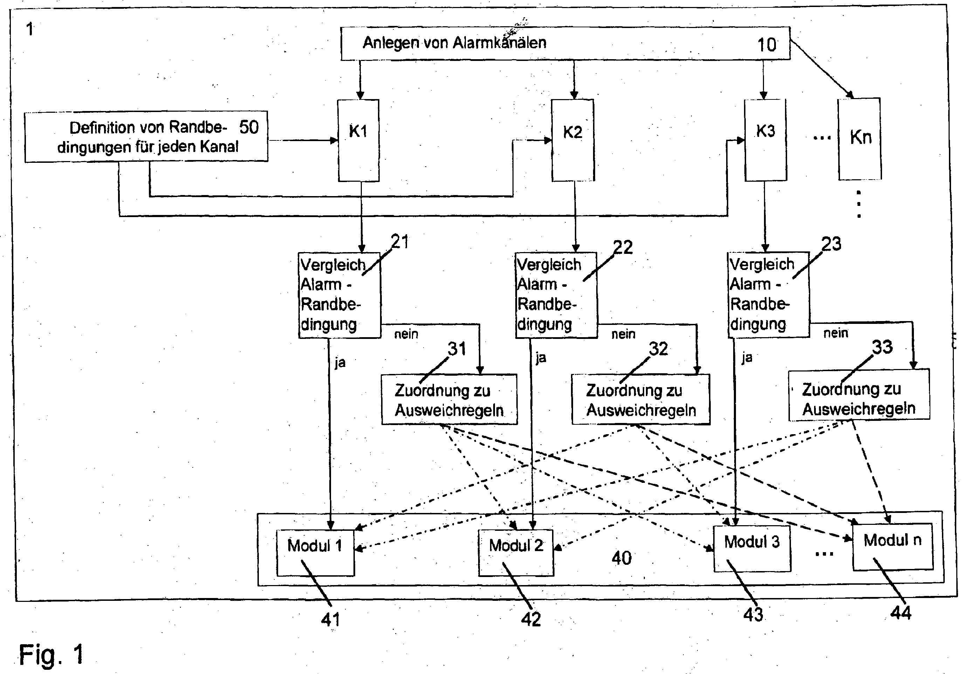

**Fig.** 1 zeigt ein beispielhaftes Alarmverwaltungssystem 1, welches Zugriff auf Alarmmeldungen einer Kraftwerksanlage hat.

Dem erfindungsgemäßen System 1 zur Verwaltung von anstehenden Alarmmeldungen aus Messwerten, Prozessgrößen und/oder Zustandsmeldungen der Kraftwerksanlage sind die Alarmmeldungen beispielsweise aus einer Datenverarbeitungseinrichtung zuführbar und mittels einer Anzeigemodule 41, 42, 43, 44 umfassenden Anzeigeeinheit 40 darstellbar.

Das erfindungsgemäße Alarmverwaltungssystem 1 umfasst ein Modul zum Anlegen von Alarmkanälen 10. Die mit dem Modul 10 angelegten Alarmkanäle K1, K2, K3, .... Kn sind für verschiedene Darstellungsarten der jeweils anstehenden Alarmmeldungen eingerichtet, wobei den Alarmkanäle K1, K2, K3 .... Kn für die verschiedenen Darstellungsarten jeweils dem entsprechendem Anzeigemodule 41, 42, 43, ... 4n der Anzeigeeinheit 40 zuordenbar sind. Für den ersten angelegten Kanal K1 ist beispielsweise die Darstellung der dem ersten Kanal K1 zuordenbaren Alarmmeldungen als Liste vorgesehen und für den zweiten angelegten Kanal K2 ist beispielsweise die Darstellung der dem zweiten Kanal K2 zuordenbaren Alarmmeldungen als akustisch unterlegte Alarmmeldeanzeige vorgesehen.

Für die angelegten Kanäle K1, K2, K3 .... Kn werden gemäß dem erfindungsgemäßen Verfahrens Randbedingungen 50, die nachfolgend auch als Attribute bezeichnet werden, bezüglich einer Zuordnung zum entsprechenden Anzeigemodul 41, 42, 43, ... 4n festgelegt. Beispielsweise sind dem ersten Kanal K1 für die Anzeige der zugeordneten Alarmmeldungen unterschiedliche Schriftgrößen und/oder unterschiedliche Farben und dem zweiten Kanal K2 unterschiedliche Lautstärken in Abhängigkeit von der Priorität der jeweils anstehenden Alarmmeldung als Randbedingungen 50 zugewiesen.

Mittels von im Alarmverwaltungssystem 1 integrierten Vergleichsmodulen 21, 22, 23 für jeden Kanal K1, K2, K3 .... Kn ist ein Vergleich der Alarmmeldungen mit den zugeordneten Randbedingungen 50 bezüglich einer Übereinstimmung durchführbar.

Diejenigen Alarmmeldungen, die mit den zugeordneten Randbedingungen 50 des jeweiligen Kanals K1, K2, K3 .... Kn übereinstimmen, sind dem entsprechendem Anzeigemodul 41, 42, 43 ... 4n des jeweiligen Kanals zur Darstellung dahingehend zuführbar, dass beispielsweise eine erste Alarmmeldung, die mit der Randbedingung 50 für den ersten Kanal K1 übereinstimmt vom ersten Anzeigemodul 41 dargestellt wird.

Diejenigen Alarmmeldungen, die mit den zugeordneten Randbedingungen 50 bezüglich einer Zuordnung zum entsprechenden Anzeigemodul 41, 42, 43 ... 4n nicht übereinstimmen, sind einem Auswahlmodul 31, 32, 33 zuführbar und auf Übereinstimmung mit zuvor festgelegten Ausweichregeln zur Zuordnung zu dem jeweiligen Anzeigemodul 41, 42, 43 ... 4n überprüfbar und sind entsprechend dem Ergebnis der Überprüfung den jeweils in den Ausweichregeln festgelegten Bedingungen den entsprechenden Anzeigemodulen 41, 42, 43 ... 4n zur Darstellung übermittelbar. Beispielsweise wird eine zweite Alarmmeldung, die eigentlich für den zweiten Kanal K2 vorgesehen ist auf Grund einer vorübergehenden Überlastung des zweiten Kanals K2 nicht dem zweiten Anzeigemodul 42 zugeordnet, sondern zu einem weiteren Anzeigemodul 44 übertragen, dessen Aufnahmekapazität für anstehende Alarmmeldungen entsprechend der vorgegebenen Ausweichregeln noch nicht erreicht ist.

**Fig**. 2 zeigt ein beispielhaftes Anzeigemodul zur Alarmvisualisierung in der Leitwarte oder Leitanlage eines Kraftwerkes mittels einer sogenannten Alarmwolke 100.

Die Darstellungsart der Alarmmeldungen als Alarmwolke auf dem Anzeigemodul 41, 42, 43, 44 bietet beispielsweise folgende Randbedingungen 50 an: Reihenfolge, Schriftgröße, Schriftfarbe, Schrifttransparenz, Schriftblinken der entsprechenden Alarmmeldung. Diese Randbedingungen 50 sind entsprechend der vorliegenden Erfindung beliebig mit den Eigenschaften der Alarme, wie beispielsweise ihrer Priorität, Aktualität, dem Zeitrahmen in dem eine Reaktion auf die Meldung erfolgen sollte oder wie oft der Alarm bereits aktiviert wurde, verknüpfbar.

Gegenüber den herkömmlichen Alarmlisten, bei denen üblicherweise nur eine Sequenz, eine bestimmte Farbe zur Anzeige der Priorität der Meldung und/oder ein Blinken bezüglich der Aufforderung zum Quittieren der angezeigten Alarmmeldung als Darstellungsart verwendet wird, sind nunmehr in vorteilhafter Weise weitere Attribute 50, beispielsweise die Schriftgröße und die Schrifttransparenz der angezeigten Alarmmeldung, visualisierbar. Detaillierte Informationen zu den Alarmen können auf Anforderung verfügbar gemacht werden, beispielsweise als angezeigtes temporäres Fenster, wenn der Cursor am Bildschirm der Datenverarbeitungseinrichtung über ein entsprechendes Feld bzw. einen entsprechenden Bereich auf dem Bildschirm geführt wird oder wenn ein entsprechender Eintrag angeklickt bzw. ausgewählt wird.

Die anstehenden Alarmmeldungen werden beispielsweise in einer Liste entsprechend ihrer Priorität sortiert und dann gemäß einer zuvor festgelegten Randbedingung 50 in Form eines großflächigen Fensters 110 angezeigt.

Als Randbedingung 50 kann auch festgelegt sein, dass einzelne unterschiedlich gewichtete Alarmmeldungen in dem als Liste ausgeführtem Anzeigemodul 41 in der Größe ihrer Darstellung oder durch farbliche Hervorhebungen dargestellt sind.

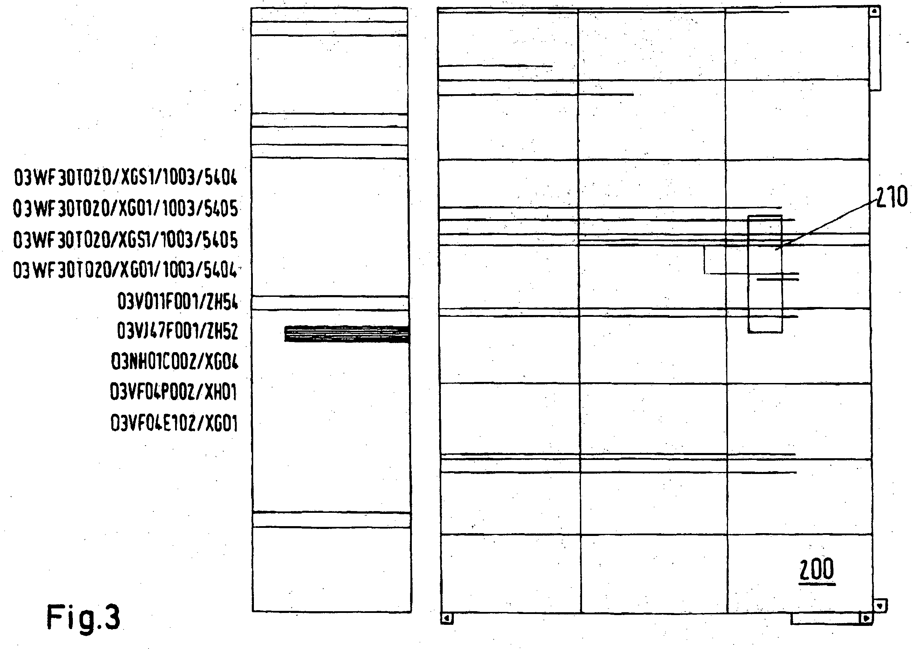

**Fig**. 3 zeigt ein weiteres beispielhaftes Anzeigemodul zur Darstellung von anstehenden Alarmmeldungen mittels einer Alarmaufzeichnung 200, die einen Dauer und zeitliche Relationen bzw. den zeitlichen Verlauf von anstehenden Alarmen zeigt. Die Alarmdarstellung gemäß Fig. 3 wird auch als Alarmchronik bezeichnet.

In der gezeigten Darstellung ist beispielsweise wesentlich besser erkennbar, wenn mehrere Alarme gleichzeitig aufgetreten sind und/oder nur kurz aktiv waren. Außerdem lassen sich durch verschiedene Farben und Helligkeiten unterschiedliche Bedingungen, wie Priorität, Status oder Dauer intuitiv visualisieren. Da die Linienbreite im Extremfall auf einen Pixel begrenzt werden kann, lassen sich auch eine hohe Anzahl Alarme visualisieren. Mittels einer verschiebbaren Vergrößerungseinrichtung 210, auch Lupe genannt, sind weitere Einzelheiten, wie Bezeichnung des Alarms, Zeitstempel oder erläuternder Text zu den Alarmen verfügbar.

## Patentansprüche

1. Alarmverwaltungssystem zur Verwaltung von Alarmmeldungen einer technischen Anlage oder eines technischen Prozesses, wobei die Alarmmeldungen einer Datenverarbeitungseinrichtung zuführbar und mittels Anzeigemodulen (41, 42, 43 ... 4n) darstellbar sind, **dadurch gekennzeichnet, dass** die Datenverarbeitungseinrichtung ein Modul (10) zum Anlegen von Alarmkanälen (K1, K2, K3) für verschiedene Darstellungsarten der jeweils anstehenden Alarmmeldungen aufweist, wobei
• jeder der mit dem Modul (10) angelegten Alarmkanäle (K1, K2, K3) jeweils einem der Anzeigemodule (41, 42, 43 ... 4n) zugeordnet ist,
• die angelegten Alarmkanäle (K1, K2, K3) als Kommunikationskanäle ausgeführt und für eine Übertragung der Alarmmeldungen zu den Anzeigemodulen (41, 42, 43 ... 4n) vorgesehen sind,
• für den angelegten Kanal (K1, K2, K3) jeweils Randbedingungen (50) bezüglich einer Zuordnung zum entsprechenden Anzeigemodul (41, 42, 43 ... 4n) festgelegt sind,
• ein Vergleichsmodul für jeden Kanal (K1, K2, K3) einen Vergleich der Alarmmeldungen mit den zugeordneten Randbedingungen (50) bezüglich einer Übereinstimmung durchführt,
• diejenigen Alarmmeldungen, die mit den zugeordneten Randbedingungen (50) des jeweiligen Kanals (K1, K2, K3) übereinstimmen dem entsprechenden Anzeigemodul (41, 42, 43 ... 4n) des jeweiligen Kanals (K1, K2, K3) zur Darstellung zuführbar sind,
• diejenigen Alarmmeldungen, die mit den zugeordneten Randbedingungen (50) bezüglich einer Zuordnung zum entsprechenden Anzeigemodul (41, 42, 43 ... 4n) nicht übereinstimmen, einem Auswahlmodul (31, 32, 33) zuführbar sind, auf Übereinstimmung mit zuvor festgelegten Ausweichregeln zur Zuordnung zu einem weiteren Anzeigemodul (41, 42, 43 ... 4n) überprüfbar sind und entsprechend den jeweils in den Ausweichregeln festgelegten Bedingungen dem weiteren Anzeigemodul (41, 42, 43 ... 4n) zur Darstellung übermittelbar sind..

2. Alarmverwaltungssystem nach Anspruch 1, **dadurch gekennzeichnet, dass** ein erster Kanal (K1) zur Darstellung der dem ersten Kanal (K1) zuordenbaren Alarmmeldungen als Liste und ein zweiter Kanal (K2) zur Darstellung der dem zweiten Kanal (K2) zuordenbaren Alarmmeldungen in Verbindung mit akustischen Signalen vorgesehen sind.

3. Alarmverwaltungssystem nach einem der vorherigen Ansprüche, **dadurch gekennzeichnet, dass** die von den Anzeigemodulen bereitgestellten Darstellungsarten für die anstehenden Alarmmeldungen des Weiteren umfassen eine Darstellung als Alarmwolke und/oder Alarmchronik.

4. Alarmverwaltungssystem nach einem der vorherigen Ansprüche, **dadurch gekennzeichnet, dass** wenigstens ein Alarmkanal (K1, K2, K3) mit einer elektronischen Nachrichtenübermittlung per E-Mail oder SMS verknüpft ist.

5. Alarmverwaltungssystem nach einem der vorherigen Ansprüche, **dadurch gekennzeichnet, dass** die Alarmmeldungen aus Messwerten, Prozessgrößen und/oder Zustandsmeldungen einer technischen Anlage oder eines technischen Prozesses gebildet sind.

6. Alarmverwaltungssystem nach einem der vorherigen Ansprüche, **dadurch gekennzeichnet, dass** die Randbedingungen (50) bezüglich einer Zuordnung zu einem der Anzeigemodule (41, 42, 43 ... 4n) die Lautstärke eines Signals im Kontrollraum der Anlage, die maximal anzuzeigende Anzahl von Alarmmeldung innerhalb eines festgelegten Zeitraumes und/oder eine zuvor definierte Anzahl von Alarmmeldungen einer hohen Priorität sind.

7. Alarmverwaltungssystem nach einem der vorherigen Ansprüche, **dadurch gekennzeichnet, dass** die Randbedingungen (50) bezüglich einer Zuordnung zu einem der Anzeigemodule (41, 42, 43 ... 4n) eine vorab festgelegte Anzahl zu übermittelnder SMS oder E-Mails bezüglich anstehender Alarmmeldungen sind.

8. Alarmverwaltungssystem nach einem der vorherigen Ansprüche, **dadurch gekennzeichnet, dass** von einer der Datenverarbeitungseinrichtung gebildeten Leitwarte Kanäle (K1, K2, K3) angelegt sind, deren Randbedingungen (50) festlegen, dass in der Leitwarte eine vorab festgelegte Anzahl von anstehenden Alarmmeldungen einer vorab festgelegten Priorität anzeigbar und/oder akustisch zu melden sind.

9. Alarmverwaltungssystem nach einem der vorherigen Ansprüche, **dadurch gekennzeichnet, dass** die regelbasierte Auswertung durch Ausweichregeln gemäß der nachfolgenden Bedingung erfolgt:
- Alarmmeldung ist für einen Kanal 1 vorgesehen, welcher zur Darstellung der Alarmmeldung als SMS für einen ersten Bediener vorgesehen ist, steht der Kanal 1 nicht zur Verfügung oder ist der Kanal 1 durch die Anzeige einer vorab festgelegten Anzahl anstehender Alarmmeldungen überfordert, ist Alarmmeldung zu einem Kanal 2, weiterzuleiten.

10. Alarmverwaltungssystem nach einem der vorherigen Ansprüche, **dadurch gekennzeichnet, dass** die regelbasierte Auswertung durch Ausweichregeln gemäß der nachfolgenden Bedingung erfolgt:
- stehen mehr als zwei Alarme mit einer hohen Priorität am Kanal (K1, K2, K3) an, dann sind alle mit einer niedrigeren Priorität anstehenden Alarmmeldungen in einen Zwischenpuffer, beispielsweise zur Archivierung und/oder einer nachfolgenden Auswertung und Analyse zu übertragen.

11. Verfahren zur Verwaltung von Alarmmeldungen einer technischen Anlage oder eines technischen Prozesses, wobei die Alarmmeldungen mittels Anzeigemodulen (41, 42, 43 ... 4n) dargestellt werden, unter Einsatz einer Datenverarbeitungseinrichtung, die Zugriff auf die Alarmmeldungen hat, **dadurch gekennzeichnet, dass**
• Alarmkanäle (K1, K2, K3) für verschiedene Darstellungsarten der jeweils anstehenden Alarmmeldungen angelegt werden,
• der angelegte Alarmkanal (K1, K2, K3) jeweils einem der Anzeigemodule (41, 42, 43 ... 4n) zugeordnet wird,
• die angelegten Alarmkanäle (K1, K2, K3) als Kommunikationskanäle für eine Übertragung der Alarmmeldungen zu den Anzeigemodulen (41, 42, 43 ... 4n) ausgeführt werden,
• für den angelegten Kanal (K1, K2, K3) jeweils Randbedingungen (50) bezüglich einer Zuordnung zum entsprechenden Anzeigemodul (41, 42, 43 ... 4n) festgelegt werden,
• für jeden Kanal (K1, K2, K3) ein Vergleich der Alarmmeldungen mit den zugeordneten Randbedingungen (50) bezüglich einer Übereinstimmung durchgeführt wird,
• diejenigen Alarmmeldungen, die mit den zugeordneten Randbedingungen (50) des jeweiligen Kanals (K1, K2, K3) übereinstimmen dem entsprechenden Anzeigemodul (41, 42, 43 ... 4n) des jeweiligen Kanals (K1, K2, K3) zur Darstellung zugeführt werden,
• diejenigen Alarmmeldungen, die mit den zugeordneten Randbedingungen (50) bezüglich einer Zuordnung zum entsprechenden Anzeigemodul (41, 42, 43 ... 4n) nicht übereinstimmen einem Auswahlmodul (31, 32, 33) zugeführt und auf Übereinstimmung mit zuvor festgelegten Ausweichregeln zur Zuordnung zu einem weiteren Anzeigemodul (41, 42, 43 ... 4n) überprüft werden und entsprechend den jeweils in den Ausweichregeln festgelegten Bedingungen dem weiteren Anzeigemodul (41, 42, 43 ... 4n) zur Darstellung übermittelt werden.

12. Verfahren nach Anspruch 11, **dadurch gekennzeichnet**, ein erster Kanal, (K1) zur Darstellung der dem ersten Kanal (K1) zuordenbaren Alarmmeldungen als Liste und ein zweiter Kanal (K2) zur Darstellung der dem zweiten Kanal (K2) zuordenbaren Alarmmeldungen in Verbindung mit akustischen Signalen vorgesehen werden.

13. Verfahren nach Anspruch 11 oder 12, **dadurch gekennzeichnet, dass** als weitere Darstellungsarten für die anstehenden Alarmmeldungen eine Darstellung als Alarmwolke und/oder Alarmchronik bereitgestellt werden.

14. Verfahren nach einem der Ansprüche 11 bis 13, **dadurch gekennzeichnet, dass** wenigstens ein Alarmkanal (K1, K2, K3) mit einer elektronischen Nachrichtenübermittlung per E-Mail oder SMS verknüpft wird.

15. Verfahren nach einem der Ansprüche 11 bis 14, **dadurch gekennzeichnet, dass** die Alarmmeldungen aus Messwerten, Prozessgrößen und/oder Zustandsmeldungen einer technischen Anlage oder eines technischen Prozesses gebildet werden.

16. Verfahren nach einem der Ansprüche 11 bis 15, **dadurch gekennzeichnet, dass** die Randbedingungen (50) bezüglich einer Zuordnung zu einem der Anzeigemodule (41, 42, 43 ... 4n) die Lautstärke eines Signals im Kontrollraum der Anlage, aus der maximal anzuzeigenden Anzahl von Alarmmeldung innerhalb eines festgelegten Zeitraumes und/oder einer zuvor definierten Anzahl von Alarmmeldungen einer höhen Priorität gebildet werden.

17. Verfahren nach einem der Ansprüche 11 bis 16, **dadurch gekennzeichnet, dass** die Randbedingungen (50) bezüglich einer Zuordnung zu einem der Anzeigemodule (41, 42, 43 ... 4n) durch die Anzahl zu übermittelnder SMS oder E-Mails bezüglich anstehender Alarmmeldungen gebildet werden.

18. Verfahren nach einem der Ansprüche 11 bis 17, **dadurch gekennzeichnet, dass** von einer der Datenverarbeitungseinrichtung gebildeten Leitwarte Kanäle (K1, K2, K3) angelegt werden, deren Randbedingungen (50) festlegen, dass in der Leitwarte eine vorab festgelegte Anzahl von anstehenden Alarmmeldungen einer vorab festgelegten Priorität angezeigt und/oder akustisch übermittelt wird.

19. Verfahren nach einem der Ansprüche 11 bis 18, **dadurch gekennzeichnet, dass** die dass die regelbasierte Auswertung durch Ausweichregeln gemäß der nachfolgenden Bedingungen ausgeführt wird:
- Alarmmeldung ist für einen Kanal 1 vorgesehen, welcher zur Darstellung der Alarmmeldung als SMS für einen ersten Bediener vorgesehen ist, steht der erste Kanal 1 nicht zur Verfügung oder ist der Kanal 1 durch die Anzeige einer vorab festgelegten Anzahl anstehender Alarmmeldungen überfordert, ist Alarmmeldung zu Kanal 2, weiterzuleiten, und/oder
- stehen mehr als zwei Alarme mit einer hohen Priorität am Kanal an, dann sind alle mit einer niedrigeren Priorität anstehenden Alarmmeldungen in einen Zwischenpuffer, beispielsweise zur Archivierung und/oder einer nachfolgenden Auswertung und Analyse zu übertragen.

## Claims

1. Alarm management system for managing alarm messages of a technical installation or a technical process, the alarm messages being able to be supplied to a data processing device and being able to be presented using display modules (41, 42, 43 ... 4n), **characterized in that** the data processing device has a module (10) for creating alarm channels (K1, K2, K3) for different types of presentation of the respectively pending alarm messages,
• each of the alarm channels (K1, K2, K3) created using the module (10) respectively being assigned to one of the display modules (41, 42, 43 ... 4n),
• the created alarm channels (K1, K2, K3) being in the form of communication channels and being intended to transmit the alarm messages to the display modules (41, 42, 43 ... 4n),
• boundary conditions (50) with respect to an assignment to the corresponding display module (41, 42, 43 ... 4n) being respectively defined for the created channel (K1, K2, K3),
• a comparison module for each channel (K1, K2, K3) comparing the alarm messages with the associated boundary conditions (50) for a match,
• those alarm messages which match the associated boundary conditions (50) of the respective channel (K1, K2, K3) being able to be supplied to the corresponding display module (41, 42, 43 ... 4n) of the respective channel (K1, K2, K3) for the purpose of presentation,
• those alarm messages which do not match the associated boundary conditions (50) with respect to an assignment to the corresponding display module (41, 42, 43 ... 4n) being able to be supplied to a selection module (31, 32, 33), being able to be checked for a match with previously determined escape rules for assignment to a further display module (41, 42, 43 ... 4n) and being able to be transmitted according to the conditions respectively determined in the escape rules to the further display module (41, 42, 43 ... 4n) for the purpose of presentation.

2. Alarm management system according to Claim 1, **characterized in that** a first channel (K1) is provided for presenting the alarm messages which can be assigned to the first channel (K1) as a list and a second channel (K2) is provided for presenting the alarm messages which can be assigned to the second channel (K2) in conjunction with acoustic signals.

3. Alarm management system according to one of the preceding claims, **characterized in that** the types of presentation provided by the display modules for the pending alarm messages also comprise presentation as an alarm cloud and/or alarm history.

4. Alarm management system according to one of the preceding claims, **characterized in that** at least one alarm channel (K1, K2, K3) is linked to electronic message transmission by email or SMS.

5. Alarm management system according to one of the preceding claims, **characterized in that** the alarm messages are formed from measured values, process variables and/or status messages of a technical installation or a technical process.

6. Alarm management system according to one of the preceding claims, **characterized in that** the boundary conditions (50) with respect to an assignment to one of the display modules (41, 42, 43 ... 4n) are the volume of a signal in the control room of the installation, the maximum number of alarm messages which can be displayed within a defined period of time and/or a previously defined number of high-priority alarm messages.

7. Alarm management system according to one of the preceding claims, **characterized in that** the boundary conditions (50) with respect to an assignment to one of the display modules (41, 42, 43 ... 4n) are a previously determined number of SMSs or emails which can be transmitted with regard to pending alarm messages.

8. Alarm management system according to one of the preceding claims, **characterized in that** channels (K1, K2, K3) are created control room formed by one of the data processing devices, the boundary conditions (50) of which channels define that a previously defined number of pending alarm messages of a previously defined priority can be displayed and/or can be acoustically signaled in the control room.

9. Alarm management system according to one of the preceding claims, **characterized in that** the rule-based evaluation is carried out by means of escape rules according to the following condition:
- the alarm message is intended for a channel 1 which is intended to present the alarm message in the form of an SMS for a first operator; if the channel 1 is not available or if the channel 1 is overtaxed as a result of displaying a previously defined number of pending alarm messages, the alarm message should be forwarded to a channel 2.

10. Alarm management system according to one of the preceding claims, **characterized in that** the rule-based evaluation is carried out by means of escape rules according to the following condition:
- if more than two high-priority alarms are pending in the channel (K1, K2, K3), all pending alarm messages with a lower priority should be transmitted to an intermediate buffer, for example for archiving and/or subsequent evaluation and analysis.

11. Method for managing alarm messages of a technical installation or a technical process, the alarm messages being presented using display modules (41, 42, 43 ... 4n), using a data processing device which has access to the alarm messages, **characterized in that**
• alarm channels (K1, K2, K3) are created for different types of presentation of the respectively pending alarm messages,
• the created alarm channel (K1, K2, K3) is respectively assigned to one of the display modules (41, 42, 43 ... 4n),
• the created alarm channels (K1, K2, K3) are in the form of communication channels for transmission of the alarm messages to the display modules (41, 42, 43 ... 4n),
• boundary conditions (50) with respect to an assignment to the corresponding display module (41, 42, 43 ... 4n) are respectively defined for the created channel (K1, K2, K3),
• for each channel (K1, K2, K3) the alarm messages are compared with the associated boundary conditions (50) for a match,
• those alarm messages which match the associated boundary conditions (50) of the respective channel (K1, K2, K3) are supplied to the corresponding display module (41, 42, 43 ... 4n) of the respective channel (K1, K2, K3) for the purpose of presentation,
• those alarm messages which do not match the associated boundary conditions (50) with respect to an assignment to the corresponding display module (41, 42, 43 ... 4n) are supplied to a selection module (31, 32, 33), and are checked for a match with previously determined escape rules for assignment to a further display module (41, 42, 43 ... 4n) and are transmitted according to the conditions determined in the respective escape rules to the further display module (41, 42, 43 ... 4n) for the purpose of presentation.

12. Method according to Claim 11, **characterized in that** a first channel (K1) is provided for presenting the alarm messages which can be assigned to the first channel (K1) as a list and a second channel (K2) is provided for presenting the alarm messages which can be assigned to the second channel (K2) in conjunction with acoustic signals.

13. Method according to Claim 11 or 12, **characterized in that** a presentation as an alarm cloud and/or alarm history is provided as further types of presentation for the pending alarm messages.

14. Method according to one of Claims 11 to 13, **characterized in that** at least one alarm channel (K1, K2, K3) is linked to electronic message transmission by email or SMS.

15. Method according to one of Claims 11 to 14, **characterized in that** the alarm messages are formed from measured values, process variables and/or status messages of a technical installation or a technical process.

16. Method according to one of Claims 11 to 15, **characterized in that** the boundary conditions (50) with respect to an assignment to one of the display modules (41, 42, 43 .. 4n) are formed from the volume of a signal in the control room of the installation, from the maximum number of alarm messages which can be displayed within a defined period of time and/or from a previously defined number of high-priority alarm messages.

17. Method according to one of Claims 11 to 16, **characterized in that** the boundary conditions (50) with respect to an assignment to one of the display modules (41, 42, 43 ... 4n) are formed by the number of SMSs or emails which can be transmitted with regard to pending alarm messages.

18. Method according to one of Claims 11 to 17, **characterized in that** channels (K1, K2, K3) are created control room formed by one of the data processing devices, the boundary conditions (50) of which channels define that a previously defined number of pending alarm messages of a previously defined priority are displayed and/or acoustically transmitted in the control room.

19. Method according to one of Claims 11 to 18, **characterized in that** the rule-based evaluation is carried out by means of escape rules according to the following conditions:
- the alarm message is intended for a channel 1 which is intended to present the alarm message in the form of an SMS for a first operator; if the first channel 1 is not available or if the channel 1 is overtaxed as a result of displaying a previously defined number of pending alarm messages, the alarm message should be forwarded to channel 2, and/or
- if more than two high-priority alarms are pending in the channel, all pending alarm messages with a lower priority should be transmitted to an intermediate buffer, for example for the purpose of archiving and/or subsequent evaluation and analysis.

## Revendications

1. Système de gestion d'alarme destiné à gérer des messages d'alarme d'une installation technique ou d'un processus technique, dans lequel les messages d'alarme peuvent être envoyés à un dispositif de traitement de données et peuvent être représentés au moyen de modules d'affichage (41, 42, 43, ... 4n), **caractérisé en ce que** le dispositif de traitement de données comporte un module (10) destiné à installer des canaux d'alarme (K1, K2, K3) pour différents types de représentations des messages d'alarme respectifs présents, dans lequel
• chacun des canaux d'alarme (K1, K2, K3) installés par le module (10) est respectivement associé à l'un des modules d'affichage (41, 42, 43 ... 4n),
• les canaux d'alarme (K1, K2, K3) installés sont réalisés sous la forme de canaux de communication et sont prévus pour une transmission des messages d'alarme aux modules d'affichage (41, 42, 43 ... 4n),
• pour le canal installé (K1, K2, K3), des conditions aux limites (50) respectives sont établies par rapport à une association au module d'affichage (41, 42, 43 ... 4n) correspondant,
• un module de comparaison effectue, pour chaque canal (K1, K2, K3), une comparaison des messages d'alarme aux conditions aux limites (50) associées pour déterminer s'il y a concordance,
• les messages d'alarme qui concordent avec les conditions aux limites (50) associées du canal respectif (K1, K2, K3) peuvent être envoyés au module d'affichage (41, 42, 43 ... 4n) du canal respectif (K1, K2, K3) pour y être représentés,
• les messages d'alarme qui ne concordent pas avec les conditions aux limites (50) associées en ce qui concerne une association avec un module d'affichage (41, 42, 43 ... 4n) correspondant peuvent être envoyés à un module de sélection (31, 32, 33), peuvent être vérifiés pour déterminer s'il y a concordance avec des règles d'évitement préalablement établies pour leur association avec un autre module d'affichage (41, 42, 43 ... 4n) et peuvent être transmis d'une manière qui correspond aux conditions respectivement établies dans les règles d'évitement à l'autre module d'affichage (41, 42, 43 ... 4n) pour y être représentés.

2. Système de gestion d'alarme selon la revendication 1, **caractérisé en ce qu'**il est prévu un premier canal (K1) pour la représentation des messages d'alarme pouvant être associés au premier canal (K1) sous la forme d'une liste et un deuxième canal (K2) pour la représentation des messages d'alarme pouvant être associés au deuxième canal (K2) en association avec des signaux acoustiques.

3. Système de gestion d'alarme selon l'une quelconque des revendications précédentes, **caractérisé en ce que** les types de représentations fournis par les modules d'affichage pour les message d'alarme présents comprennent en outre une représentation sous la forme de nuages d'alarmes et/ou de journaux d'alarme.

4. Système de gestion d'alarme selon l'une quelconque des revendications précédentes, **caractérisé en ce qu'**au moins un canal d'alarme (K1, K2, K3) est combiné à une transmission électronique de messages par courrier électronique ou par SMS.

5. Système de gestion d'alarme selon l'une quelconque des revendications précédentes, **caractérisé en ce que** les messages d'alarme sont constitués de valeurs de mesure, de grandeurs de processus et/ou de messages d'état d'une installation technique ou d'un processus technique.

6. Système de gestion d'alarme selon l'une quelconque des revendications précédentes, **caractérisé en ce que** les conditions aux limites (50) en ce qui concerne une association à l'un des modules d'affichage (41, 42, 43 ... 4n) sont l'intensité sonore d'un signal dans une salle de contrôle de l'installation, le nombre maximum de messages d'alarme à afficher au cours d'un intervalle de temps déterminé et/ou un nombre préalablement défini de messages d'alarme de priorité élevée.

7. Système de gestion d'alarme selon l'une quelconque des revendications précédentes, **caractérisé en ce que** les conditions aux limites (50) en ce qui concerne une association avec l'un des modules d'affichage (41, 42, 43 ... 4n) sont un nombre préalablement établi de SMS ou de courriers électroniques à transmettre en ce qui concerne les messages d'alarme présents.

8. Système de gestion d'alarme selon l'une quelconque des revendications précédentes, **caractérisé en ce que** des canaux (K1, K2, K3) sont installés poste de commande formé par l'un des dispositifs de traitement de données, canaux dont les conditions aux limites (50) établissent le fait qu'un nombre préalablement établi dans le poste de commande de messages d'alarme présents ayant une priorité préalablement établie peuvent être affichés et/ou doivent être envoyés de manière acoustique.

9. Système de gestion d'alarme selon l'une quelconque des revendications précédentes, **caractérisé en ce que** l'évaluation à base de règles est effectuée conformément à des règles d'évitement selon la condition suivante :
- le message d'alarme est destiné à un canal 1 qui est prévu pour la représentation du message d'alarme sous la forme d'un SMS destiné à un premier utilisateur, le canal 1 n'est pas disponible ou le canal 1 est remplacé par l'affichage d'un nombre préalablement établi de messages d'alarme présents, et le message d'alarme doit être réacheminé vers un canal 2.

10. Système de gestion d'alarme selon l'une quelconque des revendications précédentes, **caractérisé en ce que** l'évaluation à base de règles conformément à des règles d'évitement s'effectue selon la condition suivante :
- si plus de deux alarmes de priorité élevée sont présentes sur le canal (K1, K2, K3), tous les messages d'alarme présents dont la priorité est inférieure doivent être transmis à un tampon intermédiaire, par exemple à des fins d'archivage et/ou d'évaluation et d'analyse ultérieures.

11. Procédé de gestion d'alarme destiné à gérer des messages d'alarme d'une installation technique ou d'un processus technique, dans lequel des messages d'alarme sont représentés au moyen de modules d'affichage (41, 42, 43, ... 4n) à l'aide d'un dispositif de traitement de données qui a accès aux messages d'alarmes, **caractérisé en ce que**
• chacun des canaux d'alarme (K1, K2, K3) est installé pour différents types de représentations des messages d'alarme présents respectifs,
• le canal d'alarme installé (K1, K2, K3) est respectivement associé à l'un des modules d'affichage (41, 42, 43 ... 4n),
• les canaux d'alarme installés (K1, K2, K3) sont réalisés sous la forme de canaux de communication pour une transmission des messages d'alarme aux modules d'affichage (41, 42, 43 ... 4n),
• pour le canal installé (K1, K2, K3), des conditions aux limites respectives (50) sont établies en ce qui concerne une association avec un module d'affichage (41, 42, 43 ... 4n) correspondant,
• pour chaque canal (K1, K2, K3), une comparaison des messages d'alarme est effectuée avec les conditions aux limites (50) associées pour déterminer s'il y a concordance,
• les messages d'alarme qui concordent avec les conditions aux limites (50) associées du canal (K1, K2, K3) respectif sont envoyés au module d'affichage (41, 42, 43 ... 4n) correspondant du canal (K1, K2, K3) respectif à des fins de représentation,
• les messages d'alarme qui ne concordent pas avec les conditions aux limites (50) associées en ce qui concerne une association au module d'affichage (41, 42, 43 ... 4n) correspondant sont envoyés à un module de sélection (31, 32, 33), et sont vérifiés pour déterminer s'il y a concordance avec des règles d'évitement préalablement établies pour leur association avec un autre module d'affichage (41, 42, 43 ... 4n) et sont transmis d'une manière qui correspond aux conditions respectivement établies dans les règles d'évitement à l'autre module d'affichage (41, 42, 43 ... 4n) pour y être représentés.

12. Procédé selon la revendication 11, **caractérisé en ce qu'**un premier canal (K1) est prévu pour la représentation des messages d'alarme pouvant être associés au premier canal (K1) sous la forme d'une liste et un deuxième canal (K2) est prévu pour la représentation des messages d'alarme pouvant être associés au deuxième canal (K2) en association avec des signaux acoustiques.

13. Procédé selon la revendication 11 ou 12, **caractérisé en ce qu'**il est prévu en tant qu'autres types de représentations pour les messages d'alarme présents une représentation sous la forme d'un nuage d'alarme et/ou de journaux d'alarme.

14. Procédé selon l'une quelconque des revendications 11 à 13, **caractérisé en ce qu'**au moins un canal d'alarme (K1, K2, K3) est combiné à une transmission électronique de messages par courrier électronique ou par SMS.

15. Procédé selon l'une quelconque des revendications 11 à 14, **caractérisé en ce que** les messages d'alarme sont constitués de valeurs de mesure, de grandeurs de processus et/ou de messages d'état d'une installation technique ou d'un processus technique.

16. Procédé selon l'une quelconque des revendications 11 à 15, **caractérisé en ce que** les conditions aux limites (50) en ce qui concerne une association à l'un des modules d'affichage (41, 42, 43 ... 4n) sont constituées de l'intensité sonore d'un signal dans la salle de contrôle de l'installation, du nombre maximum à afficher de messages d'alarme au cours d'un intervalle de temps établi et/ou un nombre préalablement défini de messages d'alarme de priorité élevée.

17. Procédé selon l'une quelconque des revendications 11 à 16, **caractérisé en ce que** les conditions aux limites (50) en ce qui concerne une association avec l'un des modules d'affichage (41, 42, 43 ... 4n) sont constituées du nombre préalablement établi de SMS ou de courriers électroniques à transmettre en ce qui concerne les messages d'alarme présents.

18. Procédé selon l'une quelconque des revendications 11 à 17, **caractérisé en ce que** des canaux (K1, K2, K3) sont installés poste de commande formé par l'un des dispositifs de traitement de données, canaux dont les conditions aux limites (50) établissent le fait qu'un nombre préalablement établi dans le poste de commande de messages d'alarme présents ayant une priorité préalablement établie sont affichés et/ou transmis de manière acoustique dans le poste de commande.

19. Procédé selon l'une quelconque des revendications 11 à 18, **caractérisé en ce que** l'évaluation à base de règles est effectuée conformément à des règles d'évitement selon les conditions suivantes :
- le message d'alarme est destiné à un canal 1 qui est prévu pour la représentation du message d'alarme sous la forme d'un SMS destiné à un premier utilisateur, le premier canal 1 n'est pas disponible ou le canal 1 est remplacé par l'affichage d'un nombre préalablement établi de messages d'alarme présents, et le message d'alarme doit être réacheminé vers le canal 2, et/ou
- si plus de deux alarmes de priorité élevée sont présentes sur le canal, tous les messages d'alarme présents dont la priorité est inférieure doivent être transmis à un tampon intermédiaire, par exemple à des fins d'archivage et/ou d'évaluation et d'analyse ultérieures.
